# EUROPÄISCHE PATENTSCHRIFT

(11) **EP 0 903 071 B1**
(45) Veröffentlichungstag und Bekanntmachung des Hinweises auf die Patenterteilung: **04.12.2002**
(21) Anmeldenummer: 98116757.0
(22) Anmeldetag: 04.09.1998
(51) Int. Cl.: A01D 34/00

(54) **Schneidkopf und Fadenmäher**
Cutting head and filament trimmer
Tête de coupe et tondeuse à filament

(30) Priorität: 17.09.1997 US 932165
(43) Veröffentlichungstag der Anmeldung: 24.03.1999
(73) Patentinhaber: Techtronic Industries Co., Ltd., Tsuen Wan, New Territories, Hong Kong (CN)
(72) Erfinder: Kitz, Robert E., Rock Hill, South Carolina 29732 (US); Guo, Qing H., Charlette, North Carolina 28273 (US)
(74) Vertreter: Grünecker, Kinkeldey, Stockmair & Schwanhäusser Anwaltssozietät

(56) Entgegenhaltungen:
- WO-A-97/06665
- US-A- 4 190 954
- US-A- 4 229 882
- US-A- 4 571 831
- US-A- 5 048 278
- US-A- 5 433 006

## Beschreibung

Die Erfindung betrifft einen Schneidkopf zur Aufnahme eines flexiblen Schneidelements mit einem im wesentlichen geschlossenen Boden und einer Umfangswand, wobei auf oder über dem Boden wenigstens ein Haken und in der Umfangswand wenigstens eine Öffnung jeweils zur Aufnahme des Schneidelements vorgesehen sind, und einen tragbaren Fadenmäher mit einem solchen Schneidkopf.

Die US-A-5,433,006 offenbart einen tragbaren Fadenmäher mit einem Schneidkopf, der zwei Schneidfäden hält und an vier Stellen aus einer Umfangswand austreten läßt, die um jeweils neunzig Grad zueinander versetzt sind. Die Befestigung der Schneidfäden erfolgt in einer Kammer, die oben, unten und auf einer Seite von einem Haken begrenzt wird. Der Schneidfaden wird infolgedessen radial eingesetzt.

Das der Erfindung zugrunde liegende Problem wird darin gesehen, daß das radiale Einsetzen des Schneidfadens unter den engen räumlichen Bedingungen schwierig durchzuführen ist.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind. In Patentanspruch 9 ist zudem eine vorteilhafte Verwendung eines solchen Schneidkopfes angegeben.

Auf diese Weise kann der Schneidkopf auf den Boden abgelegt und mit dem Fuß gehalten werden und das Schneidelement kann bequem in Richtung zu der Bedienungsperson in einen Aufnahmeschlitz des Hakens eingezogen werden, wozu evtl. höhere Kräfte erforderlich sind, wenn das Schneidelement mittels eines Kraftschlusses darin gehalten werden soll.

Werden mehrere Haken an gegenüberliegenden Seiten eines Mittenbereichs des Schneidkopfes, d. h, diametral zu z. B. einer Nabe vorgesehen, können entweder mehrere Schneidelemente, oder unterschiedliche Schneidelemente oder Schneidelemente in unterschiedlicher Anordnung vorgesehen werden, was die universelle Verwendbarkeit des Schneidkopfes erhöht. Die diametrale Anordnung verhindert auch evtl. Unwuchten. Es ist dabei zu beachten, daß derartige Schneidköpfe sowohl an fahrbaren wie auch an getragenen Mähgeräten verwendet werden können.

Wenn drei Paare von Öffnungen und zwei Haken vorgesehen sind, sind wenigstens drei verschiedene Arten der Führung eines oder mehrerer Schneidelemente möglich.

Sind Haken unterschiedlicher Weite vorhanden, können auch Schneidelemente unterschiedlicher Stärke verwendet werden. Auf diese Weise kann derselbe Schneidkopf bzw. das mit ihm bestückte Mähgerät sowohl im Gras, z. B. Rasen, wie auch im Unterwuchs oder Gebüsch angewendet werden.

Die Verwendung radialer Stege führt zur Erhöhung der Steifigkeit einerseits und schafft andererseits die Möglichkeit, zusätzliche Stegschlitze vorzusehen, in denen das Schneidelement eingeklemmt und somit gehalten werden kann. Da diese Stegschlitze ebenfalls zur Oberseite hin offen sind, ist es für eine Bedienungsperson einfach, das Schneidelement einzusetzen. Stegschlitze unterschiedlicher Weite lassen auch die Festlegung von Schneidelementen unterschiedlichen Durchmessers zu. Stegschlitze gleicher Weite sind ausreichend, wenn nur Schneidelemente eines Durchmessers verwendet werden.

Die Ausbildung des Aufnahmeschlitzes mit einer im wesentlichen gleichen Weite verhindert, daß das Schneidelement nur an einer Stelle des Aufnahmeschlitzes gehalten wird. Vielmehr liegt das Schneidelement auf der gesamten Länge und egal wo es sich befindet, fest in dem Haken.

Trichter, entweder am einlaufseitigen, wie auch am auslaufseitigen Ende der Öffnung oder an beiden, haben den Vorteil, daß sie Materialermüdungen des Schneidelements im Bereich von dessen Ein- oder Austritt aufgrund hoher. Flächenpressungen vermeiden.

Eine herstellungstechnisch einfache Art, den Schneidkopf an einem Antrieb zu befestigen, wird in der entsprechenden Ausbildung eines Mittenbereichs, z. B. in der Art einer Nabe gesehen, der mit einer Antriebskupplung, Welle oder dergleichen zentrisch verbunden werden kann.

Die Ausstattung des tragbaren Fadenmähers mit einem erfindungsgemäß ausgebildeten Schneidkopf ist besonders sinnvoll, weil solche Fadenmäher universell einsetzbar sein müssen und somit ein Kunde mit einem einzigen Fadenmäher in verschiedenen Bedingungen arbeiten kann.

In der Zeichnung ist ein nachfolgend näher beschriebenes Ausführungsbeispiel der Erfindung dargestellt. Es zeigt:
- Fig. 1.: einen Fadenmäher mit einem erfindungsgemäßen Schneidkopf in perspektivischer Darstellung,
- Fig. 2: den Schneidkopf nach einem ersten Ausführungbeispiel in Draufsicht,
- Fig. 3: den Schneidkopf nach Figur 2 in einer Schnittdarstellung entlang der Linie 3-3 und in Blickrichtung der dazugehörigen Pfeile in Figur 2,
- Fig. 4: den Schneidkopf nach Figur 3 bestückt mit zwei Schneidelementen, und
- Fig. 5: einen Schneidkopf nach einem zweiten Ausführungsbeispiel und in perspektivischer Darstellung.

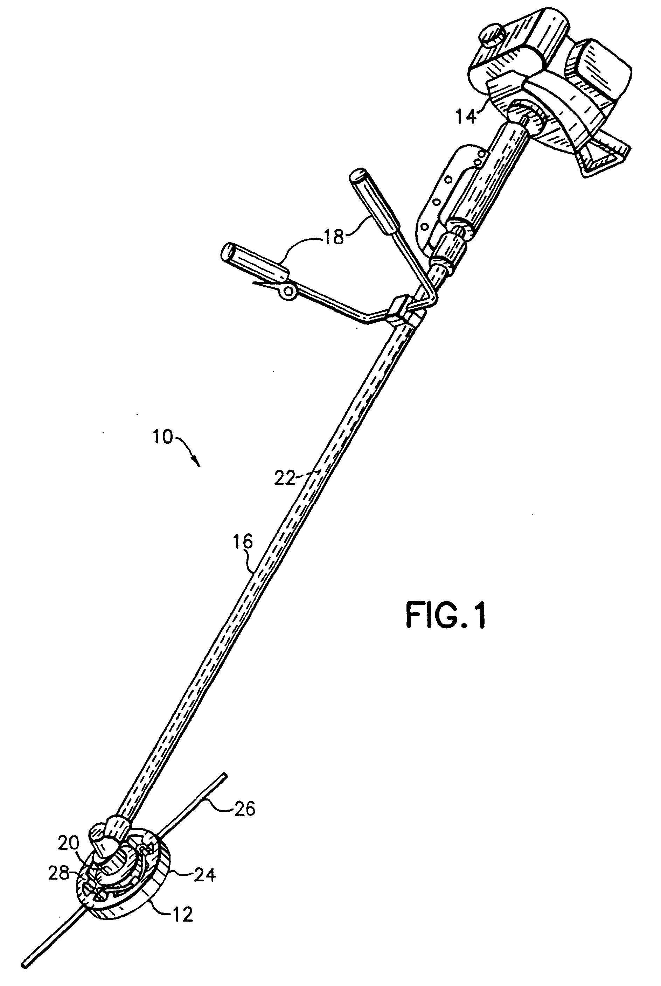

In Figur 1 ist eine perspektivische Ansicht eines Fadenmähers 10 mit einem rotierenden Schneidkopf 12 zu sehen, der die Merkmale der vorliegenden Erfindung enthält. Obwohl die vorliegende Erfindung mit Bezug auf die in der Zeichnung dargestellten Ausführungsbeispiele beschrieben wird, wird zu verstehen gegeben, daß die vorliegende Erfindung in vielen anderen Arten und anderen Ausführungsformen verwirklicht werden kann. Außerdem kann jegliche Größe, Form, Material oder Art von Elementen benutzt werden.

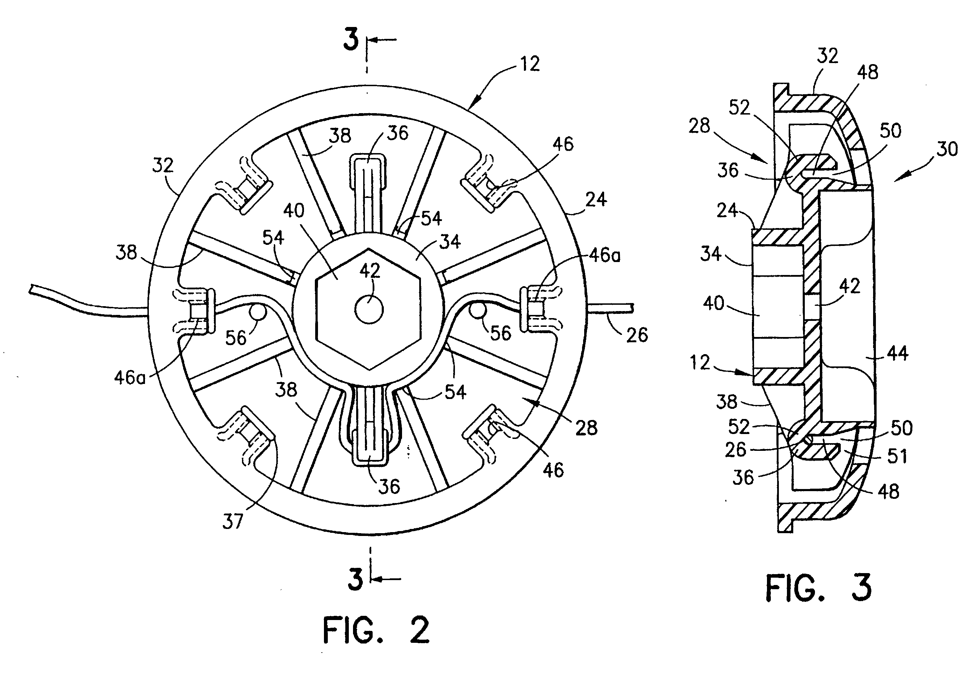

Der Fadenschneider 10 enthält im allgemeinen einen Verbrennungsmotor 14, ein Rohr 16, Handgriffe 18 und ein Gehäuse 20 zur Aufnahme des Schneidkopfes 12 an dem Fadenmäher 10. Eine Antriebswelle 22 erstreckt sich von dem Verbrennungsmotor 14 ausgehend durch das Rohr 16 zu dem Gehäuse 20. In einer alternativen Ausführungsform könnte der Fadenmäher 10 mit einem Elektromotor anstatt mit einem Verbrennungsmotor 14 versehen sein. Es wird im weiteren auf die Darstellung in den Figuren 2 bis 4 Bezug genommen, die den rotierbaren Schneidkopf 12 darstellen. Der Schneidkopf 12 enthält im allgemeinen einen Träger 24 und ein flexibles Schneidelement 26. Der Schneidkopf 12 ist von der Art, die ein Schneidelement 26, einen sogenannten Faden, fest hält, d. h. es ist kein Nachführmechanismus für das Nachliefern eines verbrauchten Schneidelements 26 vorgesehen. Wenn das Schneidelement 26 verbraucht ist, wird es von dem Träger 24 entfernt und durch ein neues ersetzt. Der Träger 24 ist ein einteiliger Teil, der vorzugsweise aus Kunststoff oder einem Polymer-Material gegossen wird. Der Träger 24 besitzt eine im wesentlichen offene Oberseite 28, einen im wesentlichen geschlossenen Boden 30, eine Umfangswand 32, einen Mittenbereich 34, Haken 36 und Stege 38. Der Mittenbereich 34 bildet einen Aufnahmebereich zum Befestigen des Schneidkopfs 12 an dem Gehäuse 20. Der Mittenbereich 34 besitzt einen sechskantigen Bereich 40 auf der Oberseite 28 zur Aufnahme und Verbindung mit einer nicht gezeigten Antriebskupplung des Gehäuses 20. In einer alternativen Ausführungsform kann der Bereich 40 mit einem anderen Profil versehen werden, das einer Verbindung mit der Antriebskupplung dient. Eine Durchgangsbohrung 42 erstreckt sich durch den Mittenbereich 34 zu einer Ausnehmung 44 an dem Boden 30. Eine nicht gezeigte Schraube der Antriebskupplung erstreckt sich durch diese Durchgangsbohrung 42. Eine nicht gezeigte Mutter ist auf die Schraube aufgesetzt und in der Ausnehmung 44 untergebracht, um den Schneidkopf 12 an die Antriebskupplung anzuschließen.

In dem gezeigten Ausführungsbeispiel weist die Umfangswand 32 sechs seitliche Öffnungen 46 auf, die sich durch diese erstrecken. Die sechs Öffnungen 46 sind in drei Paaren angeordnet, wie dies weiter unten noch erklärt wird. In dem bevorzugten Ausführungsbeispiel sind die Öffnungen 46 vorzugsweise mit Trichtern 37 versehen, die fest in den Öffnungen 46 vorgesehen sind. Jedoch brauchen die Trichter 37 in alternativen Ausführungsformen nicht vorgesehen zu werden. Die beiden Haken 36 sind von der Oberseite 28 aus dem Boden 30 zugewandt. Jeder Haken 36 besitzt einen Aufnahmeschlitz 48 mit einem Einlaß 50, der dem Boden 30 zugewandt ist, und einen geschlossenen Endbereich 52 an der Oberseite 28. Die Breite der Aufnahmeschlitze 48 ist über den größten Teil der Länge der Aufnahmeschlitze 48 gleichförmig. Die Stege 38 erstrecken sich in radialer Richtung von dem Mittenbereich 34 aus zu der Umfangswand 32. Jeder Steg 38 weist einen Stegschlitz 54 auf, der sich von der Oberseite 28 ausgehend in den Steg 38 hinein erstreckt. Der Träger 24 besitzt auch zwei Stiftbereiche 56, die sich vor dem ersten Paar von Öffnungen 46a befinden.

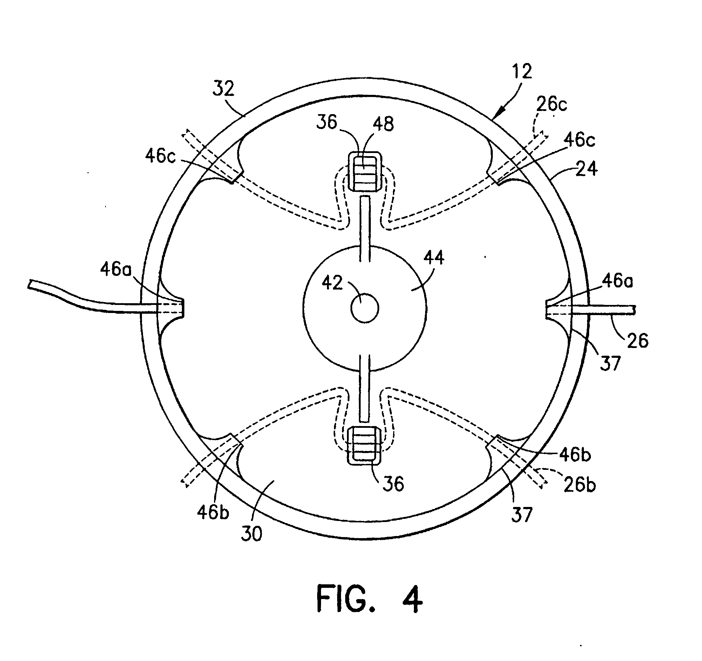

Das flexible Schneidelement 26 wird von der Oberseite 28 des Trägers 24 aus an diesem angebracht. Es ist daher nicht erforderlich, den Träger 24 von dem Gehäuse 20 zu demontieren, um ein flexibles Schneidelement 26 zu wechseln. Das Schneidelement 26 wird zunächst in einen der Haken 36 eingehängt. Der Mittenbereich des Schneidelements 26 wird durch einen Bereich 51 in den Einlaß 50 und in den Aufnahmeschlitz 48 geführt. Die Weite des Aufnahmeschlitzes 48 ist im wesentlichen gleich oder geringfügig geringer als der Durchmesser des Schneidelements 26, so daß ein Kraftschluß zwischen dem Haken 36 und dem Schneidelement 26 gebildet wird. Die Stegschlitze 54 besitzen ebenfalls die gleiche Weite. Das Schneidelement 26 wird dann durch das erste Paar von Öffnungen 46a gefädelt und auf einer Seite des Trägers 24 in die Stegschlitze 54 eingesetzt. Die gewundene Führung des Schneidelements 26 auf dem Träger 24 und der Kraftschluß des Schneidelements 26 in dem Aufnahmeschlitz 48 und dem Stegschlitz 54 hält das Schneidelement 26 lösbar aber dennoch fest an dem Träger 24. Zusätzlich zu der Befestigung des einzelnen Schneidelements 26 an dem Träger 24, ist der Träger 24 auch dazu ausgebildet, zwei separate Schneidelemente 26 aufzunehmen. Im einzelnen und wie dies in Figur 4 gezeigt ist, können zwei separate Schneidelemente 26b, 26c an den Träger 24 angebracht werden, da der Träger 24 zwei Haken 36 und zwei weitere Paare an seitlichen Öffnungen 46b, 46c aufweist. Der Träger 24 ist infolgedessen derart ausgebildet oder angepaßt, daß er wahlweise ein Schneidelement 26 in einer ersten Führung oder zwei Schneidelemente 26 in einer zweiten Führung aufnehmen kann. Die Anbringung des Schneidelements 26 oder der Schneidelemente 26 an den Träger 24 steht im Belieben einer Bedienungsperson. In beiden Fällen erstrecken sich die Schneidelemente 26 in ungefähr gleichen Winkelabständen zueinander aus dem Träger 24 heraus.

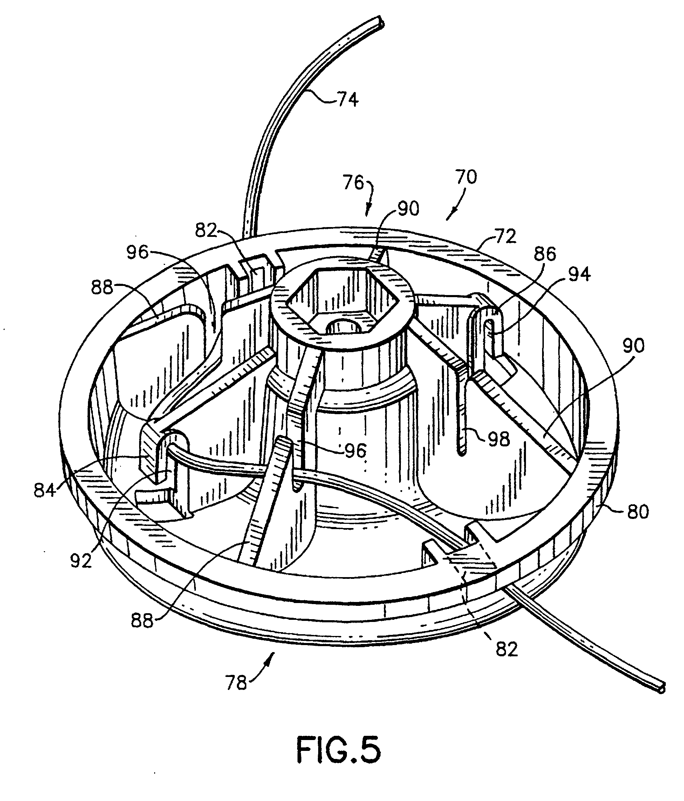

Im weiteren wird auf Figur 5 Bezug genommen, die ein alternatives Ausführungsbeispiel der vorliegenden Erfindung zeigt. In dieser Ausführungsform besitzt ein drehbarer Schneidkopf 70 einen Träger 72 und ein flexibles Schneidelement 74. Der Träger 72 ist einstückig und vorzugsweise aus einem gegossenen Kunststoff hergestellt. Der Träger 72 besitzt eine im wesentlichen offene Oberseite 76, einen im wesentlichen geschlossenen Boden 78 und eine Umfangswand 80. Die Umfangswand 80 besitzt zwei Öffnungen 82. Der Träger 72 besitzt zwei Haken 84, 86 und zwei Satz Stege 88, 90, die an gegenüberliegenden Seiten des Trägers 72 vorgesehen sind. Der erste Haken 84 besitzt einen Aufnahmeschlitz 92 mit einer ersten Weite entlang eines wesentlichen Teils seiner Länge, beispielsweise von 0,2667 cm (0,105 inch). Der zweite Haken 86 besitzt einen Aufnahmeschlitz 94 einer zweiten unterschiedlichen Weite entlang eines Hauptteils seiner Länge, von z. B. 0,2032 cm (0,080 inch). Jedoch könnte jede gängige Weite vorgesehen werden. Die Stege 88, 90 besitzen zudem Stegschlitze 96, 98. Die ersten Stegschlitze 96 besitzen eine Weite, die ungefähr der Weite des Aufnahmeschlitzes 92 entspricht. Die zweiten Stegschlitze 98 besitzen eine Weite, die ungefähr der Weite des Aufnahmeschlitzes 94 entspricht. In dieser Ausführungsform ist der Träger 72 so ausgebildet, daß er zwei flexible Schneidelemente 26 von unterschiedlichem Durchmesser aufnehmen kann. Ein flexibles Schneidelement 74 mit einem ersten Durchmesser kann in den Aufnahmeschlitz 92 und den Stegschlitzen 96 gehalten werden. Alternativ hierzu kann ein zweites flexibles Schneidelement mit geringerem Durchmesser in den Aufnahmeschlitz 94 und die Stegschlitze 98 eingefügt werden. Auf diese Weise erhält der Benutzer eine Anwendungsflexibilität, die ihm zuvor nicht zur Verfügung stand.

Es ist verständlich, daß die obige Beschreibung nur eine Darstellung der Erfindung ist. Verschiedene andere Ausführungsformen und Abänderungen können von entsprechenden Fachmännern vorgeschlagen werden, ohne daß von der Erfindung an sich abgewichen wird. Infolgedessen sollen alle Alternativen, Änderungen und Variationen, die in den Schutzbereich der Patentansprüche fallen, von der Erfindung erfaßt sein.

## Patentansprüche

1. Schneidkopf (12) zur Aufnahme wenigstens eines flexiblen Schneidelements (26, 74) mit einem im wesentlichen geschlossenen Boden (30, 78) und einer Umfangswand (32, 80), wobei auf oder über dem Boden (30, 78) wenigstens ein Haken (36, 84, 86) und in der Umfangswand (32, 80) wenigstens eine Öffnung (46, 82) jeweils zur Aufnahme des Schneidelements (26, 74) vorgesehen sind, **dadurch gekennzeichnet, daß** der Haken (36, 84, 86) zu dem Boden (30, 78) hin offen und an einer dem Boden (30, 78) abgekehrten Oberseite (28, 76) geschlossen ist.

2. Schneidkopf nach Anspruch 1, **dadurch gekennzeichnet, daß** zwei Haken (36, 84, 86) an gegenüberliegenden Seiten eines Mittenbereichs (34) vorgesehen sind.

3. Schneidkopf nach Anspruch 1 oder 2, **dadurch gekennzeichnet, daß** drei Paare von Öffnungen (46a, 46b, 46c) vorgesehen sind, wobei jeweils ein Haken (36, 84, 86) zwischen den Öffnungen wenigstens zweier Paare (46a, 46b), oder (46a und 46c) angeordnet ist.

4. Schneidkopf nach einem oder mehreren der vorherigen Ansprüche, **dadurch gekennzeichnet, daß** mehrere Haken (36, 84, 86) mit einer unterschiedlichen Weite ihres Aufnahmeschlitzes (48, 92, 94) vorgesehen sind.

5. Schneidkopf nach einem oder mehreren der vorherigen Ansprüche, **dadurch gekennzeichnet, daß** radiale Stege (38, 88, 90) zwischen der Umfangswand (32, 80) und dem Mittenbereich (34) vorgesehen sind, die zu der Oberseite (28, 76) hin offene Stegschlitze (54, 96, 98) zur Aufnahme des Schneidelements (26, 74) aufweisen und die Stegschlitze (54, 96, 98) gleiche oder unterschiedliche Weiten aufweisen.

6. Schneidkopf nach einem oder mehreren der vorherigen Ansprüche, **dadurch gekennzeichnet, daß** der Aufnahmeschlitz (48, 92, 94) im wesentlichen über seine gesamte Länge die gleiche Weite aufweist.

7. Schneidkopf nach einem oder mehreren der vorherigen Ansprüche, **gekennzeichnet durch** einen Trichter (37), der mit der Öffnung (46, 82) verbunden ist.

8. Schneidkopf nach einem oder mehreren der vorherigen Ansprüche, **dadurch gekennzeichnet, daß** er einen Träger (24, 72) mit einem Mittenbereich (34) zur Antriebsverbindung aufweist.

9. Tragbarer Fadenmäher (10) mit einem drehbar angetriebenen Schneidkopf (12) nach einem oder mehreren der vorherigen Ansprüche.

## Claims

1. Cutting head (12) for receiving at least one flexible cutting element (26, 74), with a substantially closed base (30, 78) and a circumferential wall (32, 80), there being provided, for respectively receiving the cutting element (26, 74), at least one hook (36, 84, 86) on or above the base (30, 78) and at least one opening (46, 82) in the circumferential wall (32, 80), **characterized in that** the hook (36, 84, 86) is open towards the base (30, 78) and is closed at an upper side (28, 76) facing away from the base (30, 78).

2. Cutting head according to Claim 1, **characterized in that** two hooks (36, 84, 86) are provided on opposing sides of a central region (34).

3. Cutting head according to Claim 1 or 2, **characterized in that** three pairs of openings (46a, 46b, 46c) are provided, one hook (36, 84, 86) being disposed in each case between the openings of at least two pairs (46a, 46b) or (46a and 46c).

4. Cutting head according to one or more of the preceding Claims, **characterized in that** several hooks (36, 84, 86) are provided with a different width of their receiving slot (48, 92, 94).

5. Cutting head according to one or more of the preceding Claims, **characterized in that** radial webs (38, 88, 90) are provided, between the circumferential wall (32, 80) and the central region (34), which have web slots (54, 96, 98), open towards the upper side (28, 76), for receiving the cutting element (26, 74), and the web slots (54, 96, 98) have the same or different widths.

6. Cutting head according to one or more of the preceding Claims, **characterized in that** the receiving slot (48, 92, 94) has the same width substantially over its entire length.

7. Cutting head according to one or more of the preceding Claims, **characterized by** a funnel (37) which is connected to the opening (46, 82).

8. Cutting head according to one or more of the preceding Claims, **characterized in that** it has a carrier (24, 72) with a central region (34) for drive connection.

9. Portable filament trimmer (10) with a rotatably driven cutting head (12) according to one or more of the preceding Claims.

## Revendications

1. Tête de coupe (12) destinée à recevoir au moins un élément de coupe flexible (26, 74), avec un fond (30, 78) globalement fermé et une paroi périphérique (32, 80), étant précisé qu'il est prévu sur le fond (30, 78) ou au-dessus de celui-ci au moins un crochet (36, 84, 86), et dans la paroi périphérique (32, 80) au moins une ouverture (46, 82) pour recevoir l'élément de coupe (26, 74), **caractérisée en ce que** le crochet (36, 84, 86) est ouvert en direction du fond (30, 78) et est fermé sur un côté supérieur (28, 76) opposé au fond (30, 78).

2. Tête de coupe selon la revendication 1, **caractérisée en ce qu'**il est prévu deux crochets (36, 84, 86) sur les côtés opposés d'une zone centrale (34).

3. Tête de coupe selon la revendication 1 ou 2, **caractérisée en ce qu'**il est prévu trois paires d'ouvertures (46a, 46b, 46c), un crochet (36, 84, 86) étant disposé à chaque fois entre les ouvertures d'au moins deux paires (46a, 46b) ou (46a et 46c).

4. Tête de coupe selon l'une au moins des revendications précédentes, **caractérisée en ce qu'**il est prévu plusieurs crochets (36, 84, 86) avec des fentes de réception (48, 92, 94) de largeurs différentes.

5. Tête de coupe selon l'une au moins des revendications précédentes, **caractérisée en ce qu'**il est prévu entre la paroi périphérique (32, 80) et la zone centrale (34) des pattes radiales (38, 88, 90) qui présentent des fentes de pattes (54, 96, 98) ouvertes vers le côté supérieur (28, 76) et destinées à recevoir l'élément de coupe (26, 74), et ces fentes (54, 96, 98) ont des largeurs égales ou différentes.

6. Tête de coupe selon l'une au moins des revendications précédentes, **caractérisée en ce que** la fente de réception (48, 92, 94) présente la même largeur pratiquement sur toute sa longueur.

7. Tête de coupe selon l'une au moins des revendications précédentes, **caractérisée par** une partie en forme d'entonnoir (37) qui est reliée à l'ouverture (46, 82).

8. Tête de coupe selon l'une au moins des revendications précédentes, **caractérisée en ce qu'**elle comporte un support (24, 72) avec une zone centrale (34) pour une liaison d'entraînement.

9. Débroussailleuse à fil portative (10) comportant une tête de coupe (12) entraînée en rotation selon l'une au moins des revendications précédentes.
